(19) Europäisches Patentamt
European Patent Office
Office européen des brevets

(11) **EP 3 568 906 B1**

(12) **FASCICULE DE BREVET EUROPEEN**

(45) Date de publication et mention
de la délivrance du brevet:
**22.02.2023 Bulletin 2023/08**

(21) Numéro de dépôt: **18700218.3**

(22) Date de dépôt: **11.01.2018**

(51) Classification Internationale des Brevets (IPC):
*H02M 3/18* $^{(2006.01)}$       *H02J 7/00* $^{(2006.01)}$

(52) Classification Coopérative des Brevets (CPC):
**H02J 7/0024; H02M 3/18;** Y02E 60/10

(86) Numéro de dépôt international:
**PCT/EP2018/050681**

(87) Numéro de publication internationale:
**WO 2018/130619 (19.07.2018 Gazette 2018/29)**

(54) **DISPOSITIF DE STOCKAGE D'ÉNERGIE ÉLECTRIQUE APTE À SE RECHARGER SOUS UNE PREMIÈRE TENSION ET À RESTITUER SON ÉNERGIE SOUS UNE DEUXIÈME TENSION**

VORRICHTUNG ZUR SPEICHERUNG VON ELEKTRISCHER ENERGIE MIT FÄHIGKEIT, UNTER EINER ERSTEN SPANNUNG AUFGELADEN ZU WERDEN UND UNTER EINER ZWEITEN SPANNUNG SEINE ENERGIE ZURÜCKZUGEWINNEN

ELECTRICAL ENERGY STORAGE DEVICE CAPABLE OF BEING RECHARGED UNDER A FIRST VOLTAGE AND OF RECOVERING ITS ENERGY UNDER A SECOND VOLTAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.01.2017 FR 1750270**

(43) Date de publication de la demande:
**20.11.2019 Bulletin 2019/47**

(73) Titulaire: **Commissariat à l'Énergie Atomique et aux Énergies Alternatives
75015 Paris (FR)**

(72) Inventeurs:
• **OUKASSI, Sami
38120 Saint-Egreve (FR)**
• **DUNOYER, Nicolas
38950 Quaix en Chartreuse (FR)**
• **DESPESSE, Ghislain
38340 Voreppe (FR)**

(74) Mandataire: **Atout PI Laplace
Immeuble "Visium"
22, avenue Aristide Briand
94117 Arcueil Cedex (FR)**

(56) Documents cités:
**EP-A1- 2 669 988       US-A- 6 100 665
US-A1- 2009 079 385       US-B1- 6 307 350**

**Description**

Le domaine de l'invention est celui des circuits de gestion de stockage de l'énergie.

Les éléments de stockage peuvent par exemple être des capacités, des super-capacités, des batteries, des microbatteries.

Les microbatteries sont définies comme étant des générateurs électrochimiques tout solides, formés par un empilement actif de couches minces qui constituent les électrodes (positive et négative) séparées par un électrolyte. Le circuit de gestion assure les fonctions de charge et de décharge des microbatteries, respectivement afin de stocker l'énergie disponible et de la délivrer pour une ou plusieurs applications considérées.

Avec l'essor des IoT (« internet of things ») et des WSN (« wireless sensor networks »), on assiste à une demande accrue pour des microsystèmes autonomes, qui embarquent à cet effet des composants de récupération et de stockage d'énergie. Dans ce contexte, l'interface entre la partie récupération et stockage de l'énergie relève d'une importance primordiale. En effet, dans le cas des microsystèmes autonomes, et en particulier ceux qui mettent en oeuvre la récupération de l'énergie ambiante (solaire indoor/outdoor, thermique, vibratoire ou encore électromagnétique), il est souvent question de sources d'énergies très hétérogènes en termes de spécifications électriques. Par exemple, la puissance disponible ainsi que la tension varie de manière considérable en fonction du type de source. D'autre part, les systèmes de stockage d'énergie disposent également de spécifications électriques qui varient en fonction des composants utilisés. L'interface entre les deux parties citées est souvent constituée d'un ensemble qui inclut un circuit de gestion d'énergie qui a pour fonction de transférer l'énergie récupérée vers les points de stockage, et transmettre l'énergie stockée vers les points d'applications avec le maximum d'efficacité.

Le Tableau 1 ci-dessous répertorie un certain nombre de sources et leurs spécificités.

Tableau 1

| Source | Principe de conversion | Tension typique | Puissance typique |
|---|---|---|---|
| Solaire | Micro panneau photovoltaïque | 0,5 V par celllule | Jusqu'à 15mW/cellule |
| Mécanique | Disposiif piézoélectrique | 10V AC Circuit ouvert | Des dizaines de mV |
| Mécanique | Dispositif magnétique | Quelques Volts | Plage moyenne |
| RF | Rectenna (Antenne + redressement et filtrage) | < 1V | Des centaines de $\mu$W jusqu'à quelques mW |
| Thermique | Générateur thermoélectrique | 0,2 mV/K par cellule | Des centaines de $\mu$W jusqu'à quelques mW |

Il existe deux approches possibles pour la gestion de l'énergie :

- une première approche concerne un circuit de gestion dédié à une seule source d'énergie, qui présente une configuration optimale pour une entrée considérée ne présentant que très peu de variations ;
- une seconde approche concerne un circuit de gestion configurable, utilisable pour plusieurs (ou toutes) sources d'énergies, qui peut être adapté en fonction des entrées disponibles.

Les circuits de gestion dédiée :

Le document US 8,664,920 B2 (2014) décrit un circuit de gestion d'énergie dédié pour une source d'énergie de type photovoltaïque (PV). L'architecture du circuit prend en compte les spécifications de la source donnée ainsi que la plage de variation possible, ce qui permet d'avoir un rendement optimisé du transfert de l'énergie récupérée vers les unités de stockage. Cette approche présente l'inconvénient d'être peu versatile dans la mesure où l'efficacité décroit de manière significative si les spécifications de la source d'énergie sont modifiées, par exemple d'une récupération PV à une récupération vibratoire (passage entre autre de quelques centaines de mV à quelques volts). Par conséquent, plusieurs circuits de gestion dédiés sont nécessaires pour pouvoir récupérer de manière efficace plusieurs types d'énergie, ou alors utiliser des circuits de gestion configurables.

Les circuits configurables :

Le document US 7,268,517 B2 (2007) décrit une architecture d'un circuit de gestion d'énergie configurable qui présente les éléments suivants :

- un système matriciel de batteries ;
- des micro-interrupteurs de contrôle charge/décharge ;
- une unité de contrôle (Energy input et SOC pour « State Of Charge ») des batteries.

Le circuit de gestion permet en l'occurrence de pouvoir récupérer de l'énergie depuis différentes sources (solaire, électromagnétique, mécanique, acoustique etc...) et de présenter une versatilité par comparaison aux systèmes dédiés. Néanmoins, plusieurs inconvénients caractérisent le circuit décrit, notamment l'alimentation en énergie de la partie contrôle et configuration, ce qui limite l'efficacité globale du système proposé.

Dans le cas des circuits configurables, il a été décrit un état de l'art proche de la présente demande de brevet dans l'article intitulé « Switch array system for thin film lithium microbatteries » paru dans le Journal of Power Sources 136 (2004) 401-407, un système matriciel de charge et de décharge de microbatteries mettant en oeuvre un système de micro-interrupteurs (microswitch). L'inconvénient de cette solution (par rapport à la solution de la présente invention) est l'utilisation d'un système externe de contrôle qui a pour fonction de permettre à l'utilisateur de commander les connexions (série/parallèle) des différentes microbatteries en fonction de l'entrée et de la sortie. Cette partie nécessite une alimentation électrique pour son fonctionnement, soit par une source externe, soit par le biais d'une partie de l'énergie stockée par le système, diminuant ainsi le rendement énergétique global de l'ensemble et surtout qui nécessite qu'au moins un des éléments de stockage présente une tension suffisante pour fonctionner ($\geq$ 3.3V).

Il a également déjà été proposé des solutions de type « pompe à chaleur » à base de capacités commutées telles que la référence MAX684 de chez Maxim.

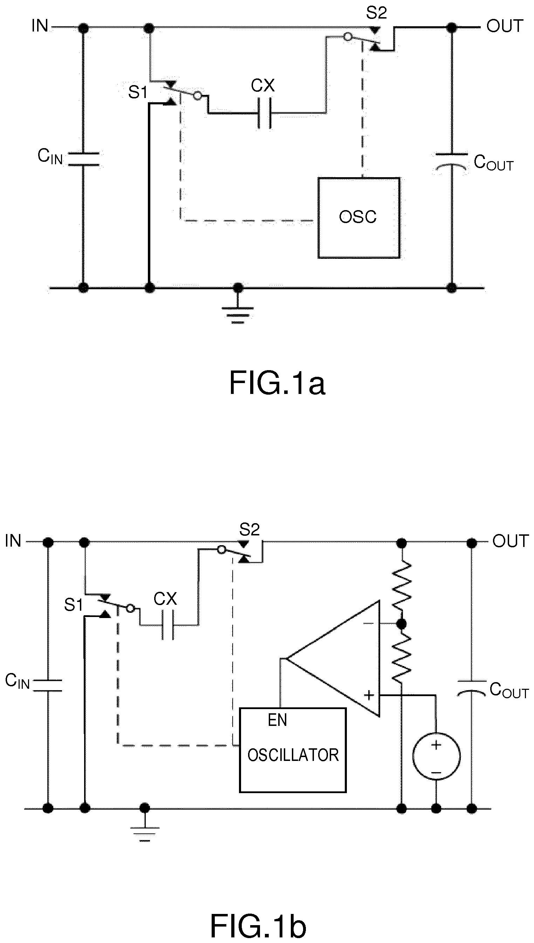

La figure 1a illustre le fonctionnement du circuit pompe charge : la capacité Cx est chargée dans un premier temps sous l'entrée IN puis mise en série avec l'entrée IN et connectée à la sortie. On a alors en sortie OUT environ 2 fois la tension d'entrée IN. Le fonctionnement peut être de type boucle ouverte : il y a basculement à haute fréquence entre les modes série et parallèle. La référence MAX684 par exemple permet de paramétrer la fréquence entre 50 kHz et 2 MHz.

Le fonctionnement peut aussi être de type boucle fermée, comme illustré en figure 1b : la tension de sortie est régulée sur une tension de consigne via un ajustement automatique de la fréquence de commutation (courant de sortie qui augmente avec la fréquence).

On note que dans ces deux cas, le pilotage n'est pas lié à l'état de charge de l'élément de stockage Cx. A chaque commutation, on considère que le temps de transfert de l'énergie est quasiment nul au regard de période des basculements série/parallèle. Ceci est normal puisque l'on considère que la source placée en entrée n'est pas vraiment limitée en courant au regard de la charge à injecter dans l'élément de stockage et que l'élément de stockage est de type capacitif et qu'il n'est lui-même pas vraiment limité en courant. Enfin, l'élément de stockage Cx n'est pas un élément de stockage de forte valeur et n'a pas pour but d'assurer l'autonomie du système. En effet, la nécessité de commuter à plus de 50kHz signifie que la capacité de stockage Cx n'assure qu'une autonomie de $20\mu s$ au plus, ce qui est assez loin des besoins de stockage d'un dispositif autonome par exemple à récupération d'énergie pour lequel on vise au moins la seconde, voir l'heure ou la journée.

Dans le cadre de la présente invention, on recherche notamment à élaborer des éléments de stockage supérieurs à 10 pAh, idéalement supérieurs à 100 ou 1000 $\mu$Ah, ce qui nécessite de contrôler leur état, surtout s'ils sont rechargés avec une source de relativement haute impédance (>10 $\Omega$) comme on peut le rencontrer en récupération d'énergie.

On peut alors envisager deux conditions de basculement :

- une première qui n'autorise la mise en série que si les éléments de stockage sont bien rechargés jusqu'à la tension souhaitée et
- une seconde qui n'autorise le passage en mode parallèle que si les éléments de stockage se sont déchargés jusqu'à une deuxième tension souhaitée.

Il est à noter qu'il s'agit de la tension des éléments de stockage et non de la tension de la source ou de celle de sortie. Si en utilisant plusieurs blocs de commutation on propose de réguler le courant ou l'impédance d'entrée, cela se fait en respectant à minima les deux conditions précédentes.

Contrairement aux pompes de charges du commerce qui visent essentiellement à fournir une tension de sortie en considérant la puissance d'entrée quasiment infinie, le Demandeur a recherché une solution ;

- pouvant intégrer une source de puissance limitée qui va mettre un certain temps à recharger l'élément de stockage, l'élément de stockage pouvant servir notamment de tampon énergétique entre une source d'entrée de puissance modérée et potentiellement intermittente et des besoins en puissance en sortie qui peuvent être différés et avec des pics beaucoup plus élevés ;

- et ayant pour objectif de permettre la recharge d'éléments de stockage en s'affranchissant d'un gestionnaire de charge externe.

Pour cela, la présente invention repose sur l'idée qu'une source basse tension (typiquement par exemple inférieure à 2V) peut être directement (éventuellement par l'intermédiaire d'interrupteurs) connectée à des éléments de stockage adaptés à être rechargés sous ce niveau de tension. La gestion de fin de charge se traduit non plus simplement par un dispositif de coupure de la recharge, mais par un basculement dans un mode série qui met à disposition l'énergie sous un niveau de tension exploitable par un circuit électronique. Un système de stockage présentant un basculement série/parallèle peut être trouvé dans la référence EP 2 669 988.

Le Demandeur propose ainsi un dispositif de stockage d'énergie avec un circuit de gestion d'énergie particulièrement adapté pour stocker de l'énergie issue d'une source d'énergie basse tension (par exemple inférieure 2V) et pour la restituer sous une tension plus élevée (par exemple 3V).

Un cas d'application concerne des systèmes de récupération d'énergie plutôt basse puissance (< 1Watt) et basse tension (< 2 V), par exemple des récupérateurs d'énergie radiofréquence, d'énergie thermique, d'énergie mécanique basés par exemple sur des principes de transduction énergie primaire/énergie électrique de type thermoélectrique, photovoltaïque, électromagnétique.

Plus précisément, la présente invention a pour objet un dispositif de stockage d'énergie comprenant au moins un bloc, ledit bloc étant connecté à une tension d'entrée $V_{in}$ et délivrant une tension $V_{out}$ supérieure à $V_{in}$ et comportant :

- n unités de stockage d'énergie avec n $\geq$ 2 ;
- un circuit de gestion de charge et de décharge relié électriquement aux n unités de stockage et permettant de connecter alternativement l'ensemble des unités de stockage d'énergie d'un même bloc entre elles, en mode parallèle ou en mode série ;
- les unités de stockage d'énergie présentant respectivement une tension de fin de charge $V_{fin\ de\ charge}$ et une tension de fin de décharge $V_{fin\ de\ décharge}$ ;
- ledit bloc présentant une tension de bloc $V_{Bloc}$ définie entre le potentiel bas de la première unité de stockage d'énergie et le potentiel haut de la nième unité de stockage d'énergie,

dans lequel ledit circuit de gestion de charge et de décharge comporte :

- des premiers moyens pour déclencher le basculement du mode parallèle au mode série, par le dépassement d'une première tension de seuil ($V_{seuil1}$) au niveau d'une des unités de stockage d'énergie, ladite première tension de seuil correspondant à une tension de fin de charge cible de ladite unité de stockage ;
- des seconds moyens pour déclencher le basculement du mode série au mode parallèle par le passage de la tension $V_{Bloc}$ en dessous d'une deuxième tension de seuil ($V_{seuil2}$), ladite seconde tension de seuil correspondant à une tension égale à la somme des n tensions de fin de décharge des n unités de stockage d'énergie ;
- lesdits premiers moyens et lesdits seconds moyens comprenant un bloc comparateur comprenant au moins un comparateur relié électriquement aux bornes d'une des unités de stockage ou aux bornes du bloc :

  ◦ la détection du passage par la première tension de seuil s'effectuant au moyen d'une tension de référence et dudit bloc comparateur et
  ◦ la détection du passage par la deuxième tension de seuil s'effectuant au moyen d'une tension de référence et dudit bloc comparateur.

Selon l'invention, le bloc comparateur comporte deux comparateurs.

La tension $V_{Bloc}$ correspond ainsi à la différence de potentiel entre la première unité de stockage et la dernière unité de stockage lorsqu'elles sont en série et donc en fin de charge.

Il est à noter que la première tension de seuil correspondant à une tension de fin de charge cible d'une unité de stockage d'énergie peut être égale à 100% de la tension de fin de charge de cette unité de stockage d'énergie, elle peut tout aussi bien être égale à 80 % voire moins de la tension de fin de charge de cette unité de stockage d'énergie et ce de manière prédéterminée.

Il en est de même concernant les tensions de décharge cible.

Selon l'invention, le dispositif comporte en outre un comparateur relié électriquement aux bornes d'une des unités de stockage ou aux bornes du bloc dans lequel la détection du passage par la première tension de seuil ou par la deuxième tension de seuil s'effectue au moyen d'une tension de référence et dudit comparateur.

Selon des variantes de l'invention, le dispositif comporte en outre un interrupteur commandable relié électriquement aux bornes d'une des unités de stockage ou aux bornes du bloc dans lequel la détection du passage par la première tension de seuil ou par la deuxième tension de seuil s'effectue au moyen d'une tension de seuil de basculement dudit interrupteur commandable électroniquement (transistor, relais, micro switch).

Selon des variantes de l'invention, ledit boc comportant n unités de stockage avec n entier supérieur ou égal à 2, le potentiel bas de la ième unité de stockage (i allant de 2 à n) est connecté au potentiel haut de la (i-1)ième unité de stockage au moyen d'un premier interrupteur et au potentiel bas de la première unité de stockage au moyen d'un second interrupteur et le potentiel haut de la (i-1)ième unité de stockage est connecté au potentiel haut de la nième unité de stockage via un troisième interrupteur.

Selon des variantes de l'invention, le deuxième et le troisième interrupteurs sont par défaut passant pour permettre la mise en parallèle des unités de stockage, par exemple constitués de transistors par défaut fermés ou de relais ou micro-switches fermés lorsque leur tension de commande est faible ou nulle.

Selon des variantes de l'invention, les tensions minimales de commande des deuxième et troisième interrupteurs sont inférieures à la première tension de seuil, avantageusement au moins 2 fois inférieure.

Selon des variantes de l'invention, la recharge des unités de stockage s'effectue par une entrée $V_{in}$ connectée au potentiel haut de la première unité de stockage, soit directement, soit par l'intermédiaire d'un composant unidirectionnel en courant (diode, limiteur de courant).

Selon des variantes de l'invention, la décharge des unités de stockage s'effectue essentiellement par une sortie $V_{out}$ connectée au potentiel haut de la nième unité de stockage par l'intermédiaire d'un composant unidirectionnel en courant, par exemple une diode ou un régulateur de tension adapté.

Selon des variantes de l'invention, au moins un bloc comporte un composant unidirectionnel en courant pour éviter le retour de courant de $V_{out}$ vers les unités de stockage lorsque celles-ci sont en mode parallèle.

Selon des variantes de l'invention, le dispositif comporte plusieurs blocs commutables ayant avantageusement la même tension $V_{in}$ d'entrée et la même tension $V_{out}$ de sortie.

Selon l'invention, le dispositif comporte au moins trois blocs, pour disposer d'au moins un bloc en mode charge, d'au moins un bloc en mode décharge et d'au moins un bloc en mode de transition dans lequel les premiers moyens et les seconds moyens sont en cours de basculement.

Le mode de transition existe toujours, il est juste plus ou moins rapide.

Selon des variantes de l'invention, au moins un bloc comporte un composant unidirectionnel en courant, ce bloc étant en mode parallèle de charge, au moins un autre bloc monté en parallèle maintenant une tension de sortie $V_{OUT}$ en mode décharge.

Selon des variantes de l'invention, le dispositif comprend des moyens pour bloquer le retour en position parallèle de certains blocs si la tension $V_{in}$ d'entrée est inférieure à la tension souhaitée. La tension souhaitée est typiquement proche de la tension pour laquelle la source fournie son maximum de puissance. Pour beaucoup de générateurs, il s'agit simplement de la tension à vide du générateur divisée par 2 (adaptation d'impédance). Pour d'autres, tel que pour les cellules photovoltaïques dont l'impédance de sortie est non linéaire, soit on peut se baser sur une caractéristique pré-enregistrée, soit sur un mécanisme de recherche du point de fonctionnement optimale de type MPPT (MPPT : Maximum Power Point Tracking).

Selon des variantes de l'invention, le retour en position parallèle de certains blocs est conditionné par un algorithme de recherche du maximum d'extraction d'énergie de la source d'énergie disposé sur l'entrée $V_{in}$ (MPPT : Maximum Power Point Tracking).

Selon des variantes de l'invention, le dispositif comporte des moyens pour maintenir en mode série au moins un des blocs.

Selon des variantes de l'invention, les unités de stockage sont des microbatteries.

Selon des variantes de l'invention, les unités de stockage sont des microbatteries dont les électrodes d'insertion peuvent être choisies parmi : Si, Ge, Sn, Bi, Sb et des alliages composés des éléments cités, LiCoO2, LiTiOS, V2O5 , et dont l'électrolyte peut être choisi parmi les matériaux suivants : LiPON (oxynitrure de lithium phosphoré), LiPOx (orthophosphate de lithium), LLTO (lithium lanthanum titanate), LATP (phosphate de lithium titane aluminium), LiSP (sulfure de lithium phosphoré), LiSON (oxynitrure de lithium soufré), LiBON (oxynitrure de lithium boraté), LiLaZrO (oxyde de lithium lanthanium zircone).

Les microbatteries peuvent comporter au moins deux électrodes de même composition et même épaisseur, par exemple une microbatterie de type substrat/Ti/SiLix/LiPON/SiLix.

L'invention sera mieux comprise et d'autres avantages apparaîtront à la lecture de la description qui va suivre donnée à titre non limitatif et grâce aux figures annexées parmi lesquelles :

- les figures 1a et 1b illustrent des exemples de pompe de charge selon l'art connu ;
- la figure 2 schématise un bloc comportant deux unités de stockage utilisé dans un dispositif de l'invention ;
- la figure 3 illustre l'intégration d'un bloc de comparaison avec hystérésis et commande d'interrupteurs au sein du bloc comprenant deux unités de stockage illustré en figure 2 ;
- la figure 4 illustre la caractéristique électrique du bloc de comparaison en fonction de la tension $V_{Bloc}$ ;

- la figure 5 illustre la caractéristique électrique du bloc de comparaison en fonction de la tension $V_{cell1}$ ;
- la figure 6 illustre un exemple de réalisation d'un bloc de comparaison connecté à la tension $V_{bloc}$ ;
- la figure 7 illustre un exemple de réalisation d'un bloc de comparaison connecté à la tension $V_{cell1}$ ;
- La figure 8 illustre un exemple de réalisation d'un bloc de comparaison connecté à la tension $V_{cell1}$ ;
- la figure 9 illustre la courbe d'évolution de la tension en fonction de la capacité aux bornes d'une microbatterie Si/LiPON/Li au cours d'un cyclage galvanostatique utilisée dans un bloc d'un dispositif de l'invention ;
- la figure 10 schématise une configuration de dispositif de l'invention comprenant 3 blocs reliés à une même tension d'entrée et à une même tension de sortie ;
- la figure 11 illustre un exemple de bloc utilisé dans un dispositif de l'invention comprenant un ensemble de 5 unités de stockage et un ensemble de transistors, permettant d'assurer de manière réversible le passage de mode parallèle en mode série ;
- la figure 12 illustre l'évolution des tensions $V_{IN}$, $V_{bloc}$, $V_{OUT}$ en fonction du temps avec un exemple de dispositif tel que celui illustré en figure 10 ;
- la figure 13 illustre un exemple d'unité de stockage comportant deux unités de stockage élémentaires comportant un point milieu, pouvant être utilisée dans une variante de dispositif de l'invention.

De manière générale, le dispositif de la présente invention comporte au moins un bloc comportant un port d'entrée pour la collecte d'énergie et un port de sortie pour la fourniture d'énergie.

Le fonctionnement en collecte d'énergie et en fourniture d'énergie simultané est possible via l'utilisation d'un nombre suffisant de blocs (certains blocs étant en mode collecte d'énergie pendant que d'autres blocs délivrent leur énergie à la sortie).

Selon l'invention, un bloc comporte n unités de stockage d'énergie avec n entier supérieur ou égal à 2. Les unités de stockage d'énergie peuvent être des batteries, des capacités ou des supercapacités. Les systèmes de stockage d'énergie sont de préférence des batteries tout solide, et plus particulièrement des microbatteries.

Le nombre n est un entier proche, en valeur supérieure, du rapport de la tension de sortie nominale visée sur la tension d'une unité de stockage d'énergie chargée.

Chaque unité de stockage d'énergie peut être à minima associée à trois transistors (sauf éventuellement la première et la dernière), deux pour la gestion de la charge (mise en parallèle : mode parallèle) et l'autre pour la gestion de la décharge (mise en série : mode série).

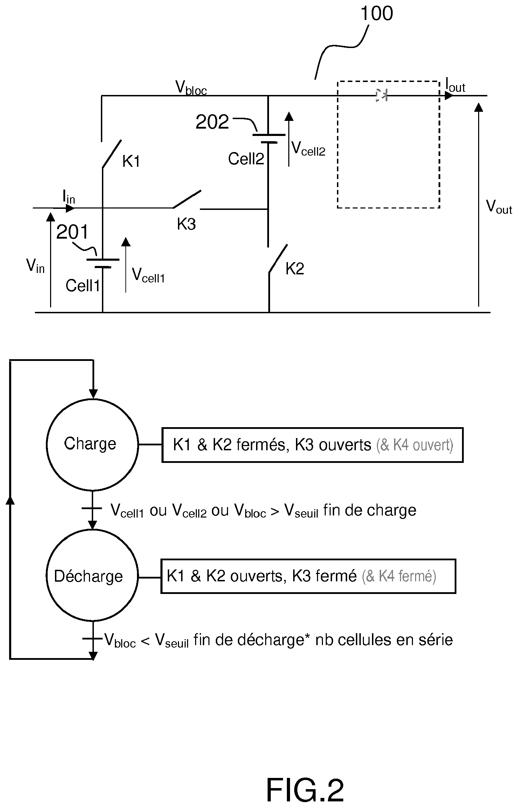

La figure 2 schématise un exemple de bloc avec un nombre minimal d'unités de stockage d'énergie. Un bloc **100,** comprend une première unité de stockage **201** et une seconde unité de stockage d'énergie **202**. La première unité de stockage d'énergie est connectée à une tension d'entrée $V_{IN}$.

Un premier interrupteur **K1** relie le potentiel haut de la première unité de stockage d'énergie au potentiel haut de la seconde unité de stockage d'énergie

Un second interrupteur **K2** relie le potentiel bas de la seconde unité de stockage d'énergie au potentiel bas de la première unité de stockage d'énergie.

Un troisième interrupteur **K3** relie le potentiel haut de la première unité de stockage d'énergie au potentiel bas de la seconde unité de stockage d'énergie, permettant la mise en série des deux unités de stockage d'énergie.

La charge se fait avec les unités de stockage d'énergie, constituant le bloc, placées en parallèle, les électrodes positives et négatives des différentes unités de stockage d'énergie étant raccordées respectivement a la polarité positive et négative du port d'entrée.

Un composant supplémentaire **K4** optionnel (représenté en gris clair et pointillés) peut être prévu. Ce composant **K4** permet d'éviter un retour de courant de $V_{OUT}$ vers les cellules lorsque ces dernières sont en parallèle.

Il est à noter que dans le cas d'un dispositif comportant plusieurs blocs, connectés à une tension d'entrée commune et à une tension de sortie commune, un composant **K4** permettant d'éviter un retour de courant est nécessaire sur les blocs fonctionnant en mode recharge si d'autres blocs maintiennent la tension $V_{out}$ (mode décharge). Le composant **K4** peut être une diode, un régulateur de tension (unidirectionnel en courant) ou un interrupteur commandé.

En phase de charge (mode parallèle), les interrupteurs **K1** et **K2** sont fermés, l'interrupteur **K3** est ouvert (**K4** est ouvert).

Après la fin de phase de charge, la tension $V_{cell1}$ de la première unité de stockage ou la tension $V_{cell2}$ de la seconde unité de stockage ou la tension $V_{Bloc}$ sont supérieures à la tension seuil de fin de charge cible.

En phase de décharge (mode série), les interrupteurs **K1** et **K2** sont ouverts, l'interrupteur **K3** est fermé (**K4** est fermé).

Après la fin de la phase de décharge, la tension $V_{bloc}$ est inférieure à la tension $V_{seuil}$ de fin de décharge (pour chacune des unités de stockage) x nbre d'unités de stockage d'énergie mises en série.

De manière générale et selon l'invention, suite au basculement d'un mode à l'autre (charge/décharge), un délai d'attente avant l'évaluation de la nouvelle condition de transition peut être appliquée. Ce délai permet d'attendre que la nouvelle configuration soit bien établie (c'est-à-dire par exemple que les interrupteurs aient bien terminé de s'ouvrir ou de se fermer ou encore que les unités de stockage aient pu bien équilibrer leur tension après la mise en parallèle).

La gestion de la fin de charge se fait par comparaison de la tension, éventuellement de l'état de charge (SOC : State of Charge) des unités de stockage du bloc avec une valeur de référence.

En pratique, il peut s'agir dans la plupart des cas d'une comparaison de la tension des unités de stockage à une tension de référence.

Pour des raisons de simplicité, cette détection de fin de charge peut se faire via un simple comparateur, ou le simple franchissement de la tension de seuil de commande d'un interrupteur (la tension grille-source d'un transistor MOS/FET/JFET..., la tension base-émetteur d'un transistor bipolaire, la tension de commande d'un relais/micro-switch, la tension de commande d'un transistor GaN/SiC...interrupteur normally ON ou OFF, en commande positive ou négative).

Dans la suite de la description, on note la tension de seuil de fin de charge $V_{seuil1}$.

La décharge se fait par la mise en série des unités de stockage, on raccorde la borne positive de l'unité de stockage n-1 à la borne négative de l'unité de stockage n. La borne positive de la dernière unité de stockage du bloc est raccordée à la borne positive du port de sortie (fourniture d'énergie).

La fin de décharge se fait par comparaison de la somme des tensions ou SoC des unités de stockage mises en série.

En pratique, il s'agira dans la plupart des cas, d'une simple comparaison de la tension globale des n unités de stockage placées en série à une tension de référence. Pour des raisons de simplicité, cette détection de fin de charge peut se faire via un simple comparateur, ou le simple franchissement de la tension de seuil de commande d'un interrupteur (la tension grille-source d'un transistor MOS/FET/JFET..., la tension base-émetteur d'un transistor bipolaire, la tension de commande d'un relais/microswitch, la tension de commande d'un transistor GaN/SiC...interrupteur normally ON ou OFF, en commande positive ou négative). Il peut s'agir d'une simple tension de seuil ou d'une combinaison de tension de seuil : plusieurs transistors (exemple montage Darlington), une diode Zener associée en série avec la commande d'un transistor....

Dans la suite de la description, on note la tension de seuil de fin de décharge $V_{seuil2}$.

La mise en série des unités de stockage est ainsi conditionnée par le franchissement de $V_{seuil1}$. La mise en parallèle est conditionnée pas le franchissement de $V_{seuil2}$ à la décharge.

En choisissant $V_{seuil2} < n\,V_{seuil1}$, le montage fonctionne comme un oscillateur à hystérésis avec un état parallèle d'autant plus court que la puissance d'entrée est élevée et un état série d'autant plus court que la puissance demandée en sortie est élevée.

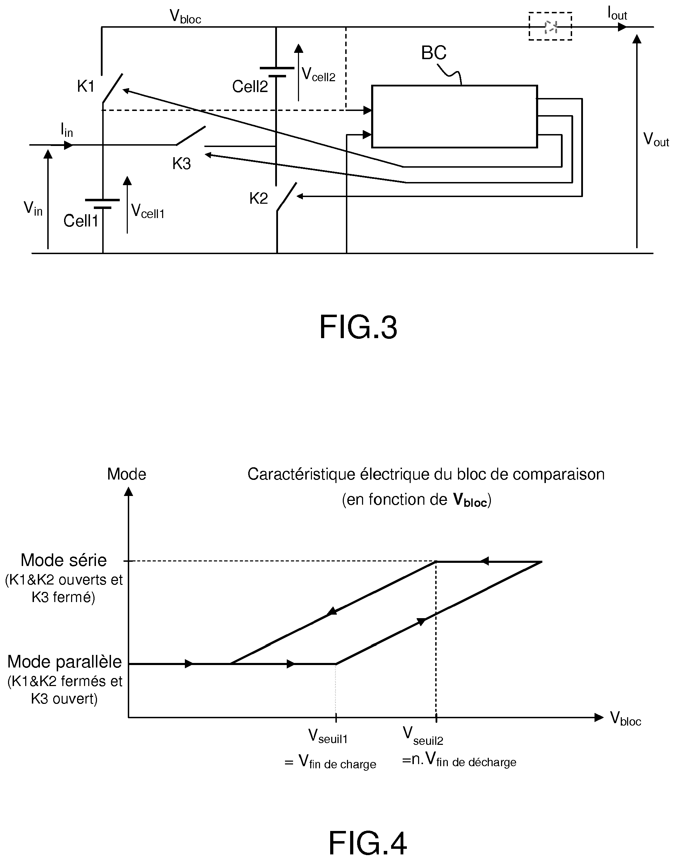

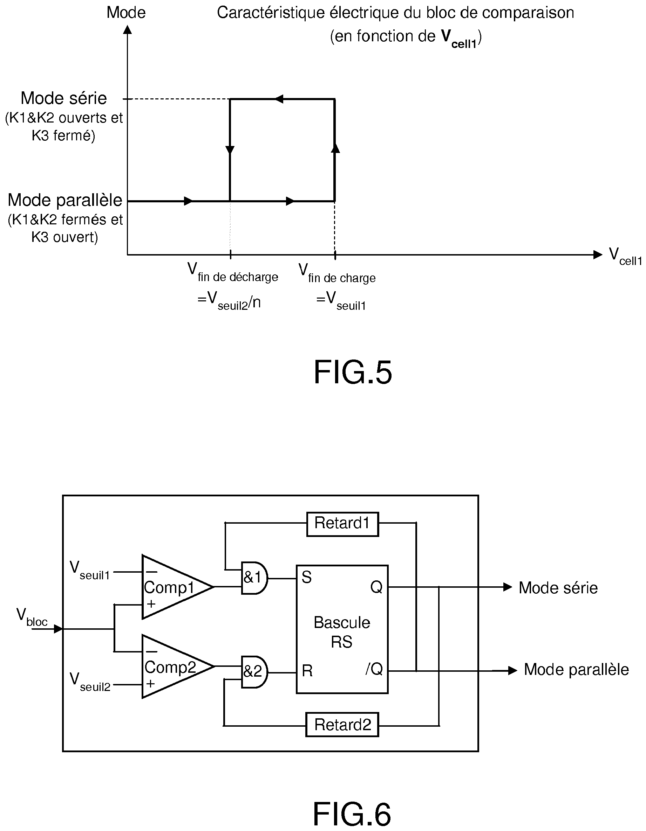

Selon la présente invention le dispositif de stockage d'énergie comprend au moins un bloc comparateur BC tel que positionné comme illustré par exemple en figure 3. Le fonctionnement du bloc comparateur avec hystérésis et commande d'interrupteurs est décrit grâce aux figures 4 et 5 qui illustrent respectivement la caractéristique électrique du bloc de comparaison avec le mode versus la tension $V_{Bloc}$ et la caractéristique électrique du bloc de comparaison avec le mode versus la tension $V_{cell1}$.

Comme illustré en figure 4, la tension $V_{bloc}$ augmente progressivement en mode charge, avec les interrupteurs **K1** et **K2** en position fermée et l'interrupteur **K3** en position ouverte et ce pour le mode parallèle, et ce jusqu'à atteindre la première tension de seuil $V_{seuil1} = V_{fin\ de}$ charge.

Lorsque la tension $V_{Bloc}$ est suffisante, le mode série peut être établi, les interrupteurs **K1** et **K2** sont en position ouverte et l'interrupteur **K3** est en position fermée. La tension Vbloc passe presque instantanément (le temps du changement d'état des interrupteurs) de $V_{seuil1}$ à $n*V_{seuil1}$.

Ensuite la tension $V_{Bloc}$ diminue jusqu'à atteindre la seconde tension de seuil $V_{seuil2} = n\ V_{fin\ de\ décharge}$.

Concernant l'évolution du mode avec la tension aux bornes de la cellule $V_{cell1}$, la figure 5 met en évidence le cycle d'hystérésis, la tension $V_{fin\ de\ décharge} = V_{seuil\ 2}\,/\,n$.

La figure 6 illustre un exemple de réalisation d'un bloc de comparaison connecté à $V_{Bloc}$ dont le fonctionnement est explicité ci-après :

En partant d'un état initial en mode parallèle : Q=0, /Q=1,
$V_{Bloc}$ est inférieur à $V_{seuil1}$ et $V_{Bloc}$ est inférieur à $V_{seuil2}$

La tension $V_{Bloc}$ augmente progressivement via le courant d'entrée $I_{in}$ jusqu'à atteindre la tension de seuil $V_{seuil1}$. La sortie du comparateur Comp1 bascule alors de 0 à 1. La sortie /Q étant à 1, la sortie de la porte ET « &1 » bascule alors aussi à 1, ce qui active l'entrée SET « S » de la bascule RS, ce qui fait passer la sortie Q à l'état 1 et la sortie /Q à l'état 0. Le mode série est alors activé.

La porte &1 permet de ne considérer le résultat de la comparaison de Comp1 que si le mode actuel est le mode parallèle. Avantageusement, un retard « Retard1 » permet de ne valider le résultat de la comparaison que si le mode parallèle est bien établi (présent de depuis un minimum de temps).

La tension $V_{Bloc}$ diminue alors progressivement via le courant de sortie $I_{out}$ jusqu'à atteindre la tension $V_{seuil2}$. La sortie du comparateur Comp2 bascule alors de 0 à 1. La sortie Q étant à 1, la sortie de la porte ET « &2 » bascule alors aussi à 1, ce qui active l'entrée RESET « R » de la bascule RS, ce qui fait passer la sortie Q à l'état 0 et la sortie /Q à l'état 1. Le mode parallèle est alors activé.

La porte &2 permet de ne considérer le résultat de la comparaison de Comp2 que si le mode actuel est le mode série. Avantageusement, un retard « Retard2 » permet de ne valider le résultat de la comparaison que si le mode série est bien établi (présent depuis un minimum de temps).

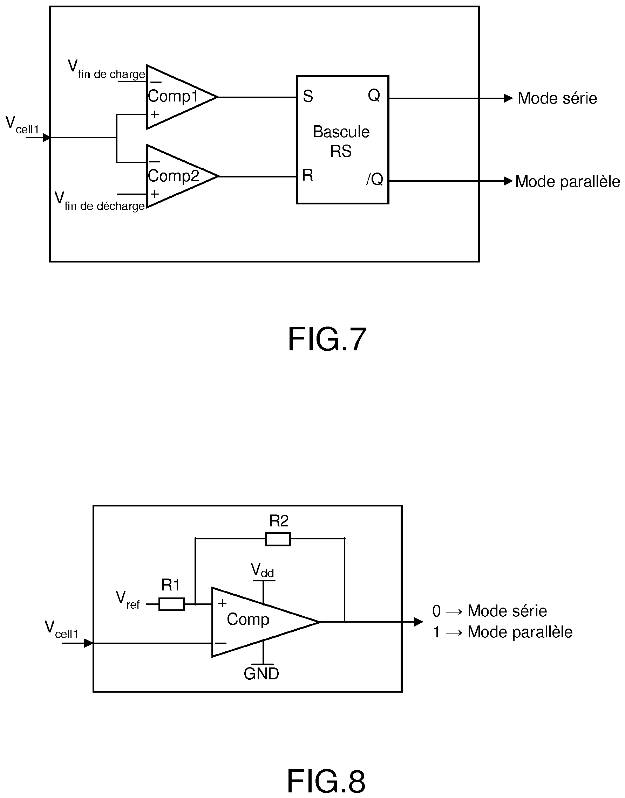

La figure 7 illustre un exemple de réalisation d'un bloc de comparaison connecté à la tension $V_{Cell1}$ dont le fonctionnement est explicité ci-après :

La tension $V_{fin\ de\ décharge}=V_{seuil2}/n$ étant toujours inférieure à $V_{fin\ de\ charge}=V_{seuil1}$, il n'est pas nécessaire de pouvoir inhiber les sorties des comparateurs par des portes ET en fonction de l'état actuel. En effet, la tension $V_{cell1}$ n'est pas impactée par les basculements parallèle/série contrairement à $V_{bloc}$ qui, à chaque basculement, est multiplié ou divisé par n.

En pratique, sur la base de $V_{cell1}$, un simple comparateur à hystérésis peut suffire. La figure 8 illustre un second exemple de réalisation d'un bloc de comparaison connecté à la tension $V_{Cell1}$ dont le fonctionnement est explicité ci-après :

Dans ce montage, les tensions de fin de charge et de fin de décharge sont définies comme suit :

$$V_{fin\ de\ charge} = \frac{R2 \cdot V_{ref} + R1 \cdot V_{dd}}{R1 + R2}$$

$$V_{fin\ de\ décharge} = \frac{R2}{R1 + R2} V_{ref}$$

Eventuellement, un interrupteur (diode ou transistor) peut être placé à l'entrée de chaque bloc pour gérer la charge du bloc. Une diode, par exemple, garantit le non-retour d'un courant des éléments de stockage vers la source lorsque la source ne produit pas. Un interrupteur commandable peut permettre entre autre :

- de réguler la tension d'entrée : en fonction du nombre de blocs branchés à la source, on peut tirer plus ou moins sur cette dernière et faire chuter plus ou moins sa tension. Ce mécanisme peut être utilisé pour faire fonctionner la source à son point de fonctionnement optimal type MPPT (Maximum Power Point Tracking utilisé notamment dans la récupération photovoltaïque) ;
- d'accélérer la recharge de blocs en particulier : par exemple pour les mettre le plus rapidement possible à la disposition de la sortie ;
- de limiter le courant tiré sur la source.

Avantageusement, les unités de stockage d'énergie peuvent être des microbatteries et qui présentent de part leur conception/fabrication la même capacité et la même tension de fonctionnement.

Elles peuvent être caractérisées par :

- un fonctionnement à bas potentiel, avantageusement entre 0 et 2V, et plus avantageusement entre 0 et 0.5V. Cette caractéristique assure la charge des microbatteries de manière directe par une large gamme de sources d'énergie ambiante. En effet, les microbatteries étant chargées en parallèle, si la tension à l'entrée (source d'énergie) est supérieure ou égale à 0.5V, toutes les microbatteries disponibles peuvent être chargées sans avoir recours à des circuits d'adaptation de tension (par exemple, pour des batteries classiques fonctionnent entre 3 et 4V, il est nécessaire de disposer d'un circuit de type élévateur de tension pour les charger si la tension source est de 0.5V, ce qui a pour effet de réduire le rendement global ;
- une capacité de stockage élevée comparée à de simples capacités électriques, avantageusement supérieure à 0.1mAh, et plus avantageusement supérieure à 1mAh, ce qui permet de disposer d'une quantité d'énergie utile (quelques mWh), suffisante pour nombre de µcomposants autonomes ;
- une faible résistance interne, avantageusement inférieure à 100 Ohms, plus avantageusement inférieure à 10 Ohms, permettant des charges/décharges à des densités de courant utiles (quelques mA), suffisantes pour nombre de µcomposants autonomes.

Les microbatteries peuvent par exemple être symétriques, c'est-à-dire qu'elles présentent une architecture particulière avec les électrodes positive et négative constituées du même matériau, les ions métalliques faisant l'aller-retour depuis l'une des deux électrodes vers l'autre à travers l'électrolyte solide qui les sépare. Dans le cas de cette configuration, la microbatterie fonctionne dans une fenêtre de potentiel centrée sur 0V, par exemple entre -1V et 1V, ce qui permet de s'affranchir de circuit de protection (passage à 0V critique pour des batteries classiques, possibilité de charge avec un potentiel supérieur à la tension limite sans dégradation).

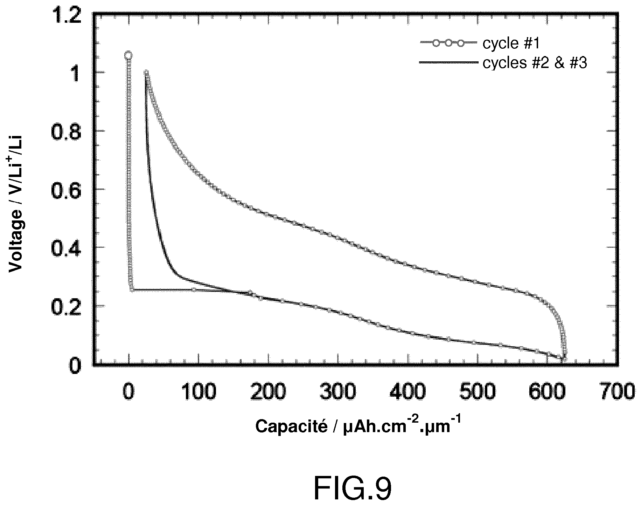

Un premier exemple d'architecture de microbatterie utilisée dans un dispositif de la présente invention peut être réalisé avec un empilement substrat/Ti/Si/LiPON/Li. La figure 9 illustre la courbe d'évolution de la tension en fonction de la capacité aux bornes d'une microbatterie Si/LiPON/Li au cours d'un cyclage galvanostatique.

Un deuxième exemple d'architecture d'unité de stockage d'énergie de type microbatterie peut être réalisé avec un empilement substrat/Ti/SiLix/LiPON/SiLix. Dans cette configuration, la microbatterie est symétrique et permet un fonctionnement en potentiel centré autour de 0V avec les avantages cités précédemment.

D'autres matériaux peuvent être considérés pour l'électrode d'insertion, on peut citer par exemple : Ge, Sn, Bi, Sb et des alliages composés d'au moins deux des éléments cités.

D'autres matériaux peuvent également être considérés pour l'électrolyte solide, par exemple LLTO, LATP, LiSP, LiSON, LiBON, LiLaZrO.

Dispositif comprenant un ensemble de blocs :

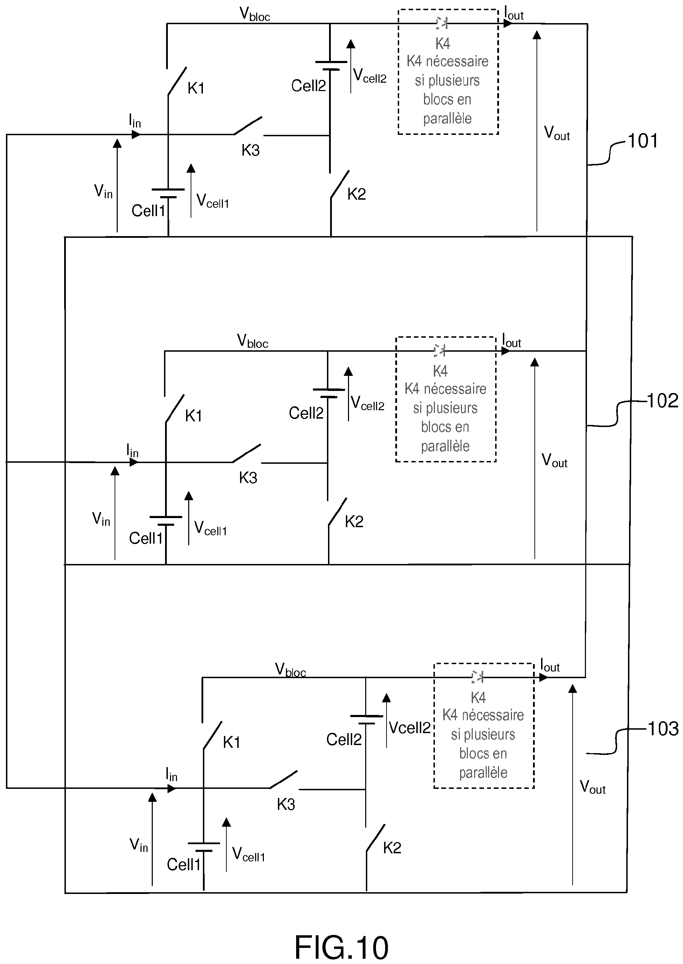

Pour assurer un fonctionnement permanent et simultané de charge et de décharge, le dispositif de l'invention comprend un minimum de 3 blocs : 1 qui se recharge via l'entrée, 1 qui se décharge sur la sortie et 1 troisième qui est susceptible d'être en train de transiter d'un mode à l'autre et donc d'être temporairement non disponible. La figure 10 schématise une telle configuration montrant un bloc **101,** un boc **102** et un bloc **103** ayant la même tension d'entrée $V_{IN}$ et la même tension de sortie $V_{out}$.

Dans un cas simplifié, le fonctionnement des blocs peut être complètement indépendant. Chacun bascule, de manière asynchrone, entre son mode série et son mode parallèle selon son hystérésis, son courant de recharge et son courant de décharge.

Dans un premier mode amélioré, parmi les blocs qui sont en mode parallèle (en attente d'être rechargés), seule une partie d'entre eux, via des interrupteurs pilotables électriquement, sont connectés à la source d'entrée de sorte à optimiser la tension et/ou le courant extrait de cette source. Dans le cas d'un générateur de type récupérateur d'énergie, le nombre de blocs en mode parallèle (en attente d'être rechargés) connectés à un générateur est idéalement optimisé en temps réel pour maximiser la puissance fournie par le générateur (« MPPT » pour « Maximum Power Point » permettant de suivre le point de puissance maximale d'un générateur électrique non linéaire), dans un mode simplifié, le système peut simplement viser une tension ou un courant d'entrée prédéfini.

Dans une variante, au lieu que les blocs en mode parallèle (en attente d'être rechargés) soient complètement connectés ou complètement déconnectés du générateur, le système peut assurer un pilotage d' interrupteurs de connexion des différents blocs, par exemple des transistors en mode linéaire, de sorte à limiter plus ou moins le courant de recharge de chacun des blocs et ainsi contrôler le courant extrait du générateur.

Dans une autre variante où le générateur placé en entrée a une capacité en courant beaucoup plus élevée que nécessaire pour alimenter le dispositif, le courant de recharge des blocs peut être régulé/limité, via des interrupteurs en mode linéaire ou des limiteurs de courant, de sorte à ne pas injecter dans les unités de stockage d'énergie par exemple des microbatteries, un courant trop important qui pourrait réduire significativement leur durée de vie.

Dans un mode optimisé et en cas de surcapacité de la source à fournir une puissance élevée, le courant de recharge s'ajuste en temps réel pour subvenir au juste besoin de l'application, pour s'assurer qu'un nombre minimum de bloc soit chargé et disponible pour alimenter la sortie.

Exemple de bloc utilisé dans un dispositif de l'invention.

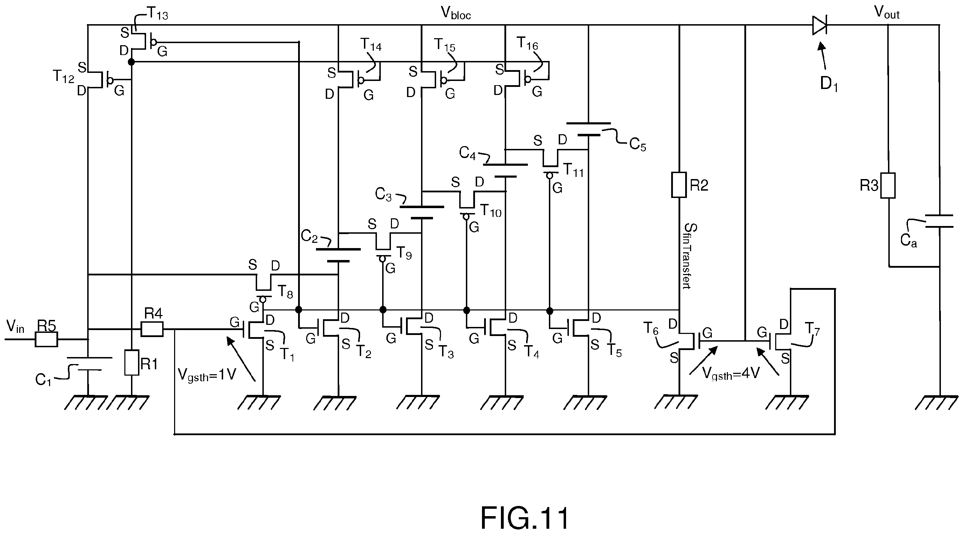

Selon cet exemple, le bloc proposé comprend comme illustré en figure 11 :

- un ensemble de 5 unités de stockage appelées ci-après batteries référencées : **C1, C2, C3, C4** et **C5** ;
- un ensemble de transistors (représentés par un schéma de grille G, drain D et source S) : **T1, T2, T3, T4, T5, T6, T7, T8, T9, T10, T11, T12, T13, T14, T15, T16 ;**
- une diode ou régulateur de courant **D1** ;
- des résistances **R1, R2, R3, R4** et **R5.**

Lorsque les batteries sont déchargées, les transistors **T1, T6** et **T7** sont ouverts, les résistances de rappel placent les batteries dans une configuration parallèle.

Lorsque la tension des batteries atteint 1V, le transistor **T1** se ferme (tension seuil Vgsth = 1V), ce qui place les batteries dans une position série. Chaque batterie ayant été chargée à 1V, leur mise en série conduit la tension $V_{bloc}$ (en sortie de l'ensemble des batteries mises en série) à atteindre environ 5*1V=5V.

Les batteries se déchargent alors vers $V_{out}$ via la diode de sortie **D1** ou avantageusement via un régulateur qui permet de stabiliser la tension de sortie tout en assurant, pour certains types de régulateur, le blocage d'un courant retour au même titre que la diode. Une telle diode ou un tel régulateur est placé en sortie de chacun des blocs si plusieurs blocs sont utilisés.

Tant que la tension $V_{bloc}$ reste supérieure à 4V, les transistors **T6** et **T7** restent fermés et le mode série est maintenu (tension seuil Vgsth = 4V).

Lorsque la tension $V_{bloc}$ passe en dessous de 4V, les transistors **T6** et **T7** s'ouvrent.

La tension des batteries est descendue à 4V15=0.8V, ce qui signifie que le transistor **T1** est aussi ouvert.

Le signal $S_{finTransfert}$ remonte au potentiel $V_{bloc}$ et conduit à une mise en parallèle des batteries.

En pratique, durant le mode série, comme le premier élément de stockage est connecté à la source, ce dernier peut continuer à se charger (plus que ce qu'il se décharge) et maintenir le transistor **T1** fermé.

Durant le mode série, cela ne pose pas problème, mais le retour en mode parallèle devient impossible, le transistor **T1** ne s'ouvrant pas, le signal $S_{finTransfert}$ ne peut remonter et fermer les transistors de mise en parallèle.

C'est pourquoi il est avantageusement prévu un transistor **T7** permettant de s'affranchir de ce problème en forçant l'ouverture du transistor **T1** durant le mode série et un peu au-delà via la constante de temps R4*$C_{T1}$ avec $C_{T1}$ la capacité d'entrée du transistor **T1** (capacité grille-source du transistor MOS).

Ainsi, le mode parallèle peut s'établir, au moins temporairement, lorsque le transistor **T6** et le transistor **T7** viennent juste de s'ouvrir (le transistor **T6** et le transistor **T7** sont identiques dans l'exemple).

Cette mise en parallèle temporaire suffit à équilibrer les tensions des éléments de stockage et à n'autoriser la mise en série que lorsque tous les éléments de stockage du bloc dépassent 1V. La mise en parallèle est alors maintenue jusqu'à ce que la tension des batteries remonte à 1V et un nouveau cycle redémarre et ainsi de suite.

Dans cet exemple, les seuils $V_{seuil1}$ et $V_{seuil2}$ sont réalisées respectivement par les transistors **T1** et **T6** (avec le transistor **T7** identique au transistor **T6).** Il est également possible d'utiliser un comparateur associé à une référence de tension pour réaliser cette fonction. Le seuil de basculement peut être alors plus précis et la comparaison plus rapide, toutefois, pour des considérations de consommation et de coût, l'utilisation d'un simple transistor peut être avantageuse si les contraintes de précision et de vitesse de basculement sont relativement relâchées (> 100mV et > 100 $\mu$s).

Typiquement tous les transistors autres que **T1, T6** et **T7** peuvent présenter une tension seuil Vgsth préférentiellement inférieure à 0,5 V.

Un exemple de fonctionnement de l'ensemble est détaillé ci-après :
La tension d'entrée $V_{in}$ est connectée à une source de tension de 2V suivie d'une résistance de 10 k$\Omega$.

Dans cet exemple, les seuils sont de 2 V pour le transistor **T1** et de 4.95 V pour les transistors **T6** et **T7.** Les autres transistors commutent à 1 V.

Au démarrage, toutes les unités de stockage **C1, C2, C3, C4** et **C5,** sont déchargées.

Lorsque la tension d'entrée $V_{in}$ commence à monter, elle recharge, au travers de son impédance de sortie **R5,** la première capacité **C1**.

Quand la tension aux bornes de la première capacité atteint 1V, les transistors de mise en parallèle : **T2, T3, T4, T5, T12, T14, T15, T16** commencent à se fermer. Les capacités sont donc progressivement placées en parallèle (les transistors passent progressivement de ohmique à pleinement passant). Pendant cette phase d'équilibrage de tension entre les 5 éléments de stockage, la tension de la première cellule reste sensiblement constante autour de 1V, tension que l'on retrouve au niveau de $V_{bloc}$.

Une fois que tous les transistors de mise en parallèle sont bien fermés, la tension d'ensemble $V_{bloc}$ recommence à monter via la recharge par la source de toutes les capacités en placées parallèles.

Lorsque la tension de la première cellule (et donc aussi des autres cellules placées en parallèle) se rapproche de 1.6V, les transistors **T1** et **T13** se ferment, **T13** reportant le résultat de la comparaison des tensions pour que le transistor **T1** commande les autres transistors, ce qui conduit à l'ouverture des transistors **T14, T15, T16, T2, T3, T4, T5, T12** de mise en parallèle et à la fermeture des transistors **T8, T9, T10, T11** de mise en série.

Les capacités sont alors en série et délivrent leur énergie à la sortie $V_{out}$ via la diode **D1**. A la mise en série, la tension atteint 8V, soit 5*1.6V, puis descend progressivement avec la consommation de la charge placée en sortie.

Le transistor **T6** permet de verrouiller le mode série, même si **T1** s'ouvre suite à une décharge de **C1.**

Lorsque $V_{bloc}$ atteint 5.2V, les transistors **T6** et **T7** s'ouvrent. Via **R4** et la capacité d'entrée de **T1,** le transistor **T1** reste forcé à l'ouverture un petit laps de temps. (Il est à noter qu'une capacité physique pourrait éventuellement compléter la valeur de la capacité d'entré de **T1).** Durant ce petit laps de temps, la résistance **R2** commande la mise en parallèle des éléments de stockage et donc leur mise en équipotentiel.

Une fois le laps de temps écoulé, le transistor **T1** est à nouveau piloté par la tension de la cellule batterie **C1,** et finalement par la tension de toutes les capacités placées en parallèle.

A la mise en parallèle, la tension $V_{bloc}$ vaut environ 5.2V/5=1.04V

Les capacités se rechargent par $V_{in}$ via son impédance de sortie **R5.**

Lorsque la tension des capacités atteint 1.6V, le système rebascule en mode série et un nouveau cycle redémarre.

Le fonctionnement est complètement autonome, ne nécessitant pas d'une source de tension externe pour alimenter un automate de commande et les commandes des transistors.

Il n'y a pas de base de temps qui cadence une fréquence de commutation. Le basculement d'un mode à l'autre est complètement asynchrone et se définit via des niveaux d'état de charge des éléments de stockage et non par rapport à une régulation de tension de sortie.

La vitesse de charge dépend de la capacité de la source à recharger rapidement les éléments de stockage d'un premier niveau vers un second niveau et la vitesse de décharge dépend du courant tiré par l'application pour passer du deuxième niveau de charge vers le premier niveau de charge.

En série avec la résistance **R5,** il est possible de disposer d'un composant monodirectionnel en courant, tel qu'une diode ou un limiteur de courant. Le limiteur de courant peut notamment servir à protéger les éléments de stockage en cas de pics de courant de la source. L'aspect unidirectionnel en courant peut permettre d'éviter que les éléments de stockage d'énergie se déchargent dans la source quand celle-ci ne fournit pas d'énergie ou encore que si plusieurs blocs sont placés en parallèle, qu'un des blocs ne se décharge dans un bloc déchargé.

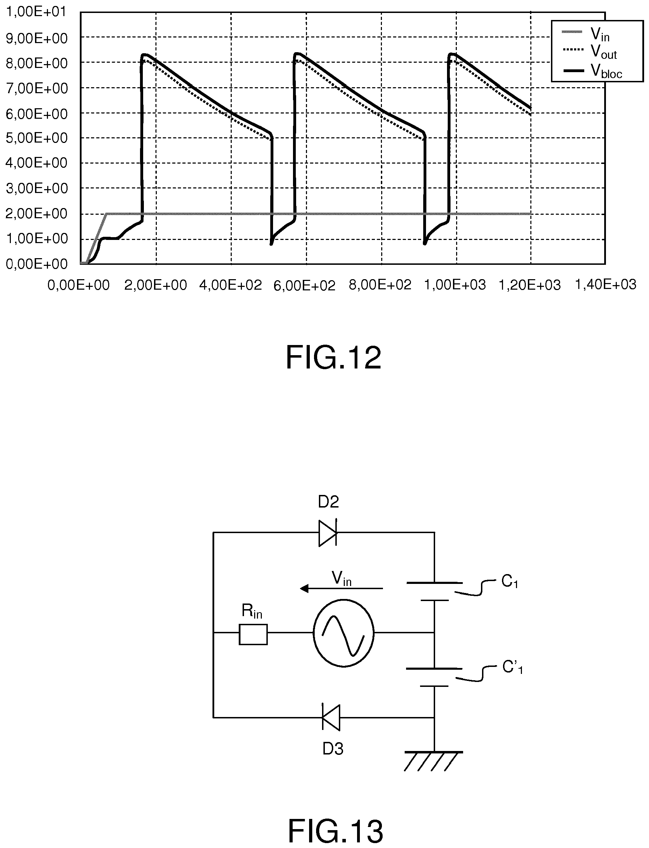

La figure 12 illustre le chronogramme tension d'entrée $V_{IN}$, tension de sortie $V_{OUT}$ et tension du bloc $V_{Bloc}$, donnant les tensions en Volts en fonction du temps (exprimé en en secondes), pour l'exemple de bloc illustré en figure 5 et obtenu par simulation sous SPICE (*Simulation Program with Integrated Circuit Emphasis*), logiciel de simulation généraliste de circuits électroniques analogiques et comportant des exemples de composants du commerce.

Les composants du commerce utilisés pour la simulation sont les suivants :

- le transistor **T1** : un composant BUK9219-55A ;
- les transistors **T2, T3, T4, T5** : des composants IRLM6244 ;
- les transistors **T6, T7 :** des composants IPB011N04N ;
- les transistors **T8, T9, T10, T11, T12, T13, T14, T15, T16** : des composants : Si4913DY ;
- la diode **D1** : un composant 1N4148 ;
- les résistances **R1, R2, R4** ont des valeurs de 10 M$\Omega$ ;
- la résistance **R3** a une valeur de 5 M$\Omega$ ;
- la résistance **R5** a une valeur de 10 k$\Omega$.

Les capacités des éléments **C1, C2, C3, C4, C5** ont des valeurs de 1 mF. La capacité **Ca** a une valeur de 10 $\mu$F.

Selon des variantes de l'invention, la première unité de stockage du bloc peut être d'une capacité supérieure aux autres éléments de stockage de sorte à ce qu'elle puisse stocker toute la puissance provenant de la source lorsque le bloc est en mode série et/ou parallèle, voire même être une hybridation de plusieurs technologies de stockage (batterie/capacité/super capacité...)..

Chaque unité de stockage peut être elle-même constituée de plusieurs unités de stockage élémentaires

La première unité de stockage peut également, par exemple, faire apparaitre un point milieu pour faciliter la collecte d'énergie en provenance d'une source d'énergie dont le potentiel évolue alternativement, tel que décrit sur la figure 13 qui montre une unité de stockage composée de deux unités de stockage élémentaires **C1** et **C1'** et faisant apparaitre un point milieu pour l'entrée.

Le dispositif de stockage de la présente invention peut être particulièrement intéressant pour des systèmes de récupération d'énergie basse tension : photovoltaïque, thermoélectrique, pile à combustible, bio-piles, électromagnétique..., pour des capteurs communicants, objet nomade.

Concernant un capteur communicant, il peut par exemple s'agir d'un capteur de température, de pression, d'humidité, d'accélération qui effectue de temps en temps des mesures et transmet sans-fil son information à un récepteur (afficheur, box internet, cloud via par exemple un réseau de type Sigfox ou Lora...).

Concernant un objet nomade, il s'agit plus d'objet que l'on transporte, qui ne reste pas à demeure, une montre connectée, des cardiomètres, capteurs de sueur, stimulateurs cardiaques...

**Revendications**

1. Dispositif de stockage d'énergie comprenant au moins un bloc, ledit bloc étant connecté à une tension d'entrée $V_{in}$ et délivrant une tension $V_{out}$ supérieure à $V_{in}$ et comportant :

   - n unités de stockage d'énergie avec n $\geq$ 2 ;
   - un circuit de gestion de charge et de décharge relié électriquement aux n unités de stockage et permettant de connecter alternativement l'ensemble des unités de stockage d'énergie d'un même bloc entre elles, en mode parallèle ou en mode série ;
   - les unités de stockage d'énergie présentant respectivement une tension de fin de charge $V_{fin\ de\ charge}$ et une tension de fin de décharge $V_{\text{fin de décharge}}$ ;
- ledit bloc présentant une tension de bloc $V_{\text{Bloc}}$ définie entre le potentiel bas de la première unité de stockage d'énergie et le potentiel haut de la nième unité de stockage d'énergie,
dans lequel ledit circuit de gestion de charge et de décharge comporte :

- des premiers moyens pour déclencher le basculement du mode parallèle au mode série, par le dépassement d'une première tension de seuil ($V_{\text{seuil1}}$) au niveau d'une des unités de stockage d'énergie, ladite première tension de seuil correspondant à une tension de fin de charge cible de ladite unité de stockage ;
- des seconds moyens pour déclencher le basculement du mode série au mode parallèle par le passage de la tension $V_{\text{Bloc}}$ en dessous d'une deuxième tension de seuil ($V_{\text{seuil2}}$), ladite seconde tension de seuil correspondant à une tension égale à la somme des n tensions de fin de décharge des n unités de stockage d'énergie ;
- lesdits premiers moyens et lesdits seconds moyens comprenant un bloc comparateur comportant au moins un comparateur relié électriquement aux bornes d'une des unités de stockage ou aux bornes du bloc :

o la détection du passage par la première tension de seuil s'effectuant au moyen d'une tension de référence et dudit bloc comparateur et
o la détection du passage par la deuxième tension de seuil s'effectuant au moyen d'une tension de référence et dudit bloc comparateur ;

- le potentiel bas de la ième unité de stockage, i allant de 2 à n, étant connecté au potentiel haut de la (i-1)ième unité de stockage au moyen d'un interrupteur ;
- le potentiel bas de la ième unité de stockage étant connecté au potentiel bas de la première unité de stockage au moyen d'un interrupteur et
- le potentiel haut de la (i-1)ième unité de stockage étant connecté au potentiel haut de la nième unité de stockage via un interrupteur ;

et en ce que ledit dispositif comporte au moins trois blocs, pour disposer d'au moins un bloc en mode charge, d'au moins un bloc en mode décharge et d'au moins un bloc en mode de transition dans lequel les premiers moyens et les seconds moyens sont en cours de basculement.

2. Dispositif selon la revendication 1, dans lequel ledit bloc comparateur comporte deux comparateurs.

3. Dispositif selon l'une des revendications 1 ou 2 comportant en outre un interrupteur commandable relié électriquement aux bornes d'une des unités de stockage ou aux bornes du bloc dans lequel la détection du passage par la première tension de seuil ou par la deuxième tension de seuil s'effectue au moyen d'une tension de seuil de basculement dudit interrupteur commandable électroniquement

4. Dispositif selon l'une des revendications 1 à 3 dans lequel l'interrupteur connecté au potentiel bas de la ième unité de stockage, i allant de 2 à n, et au potentiel bas de la première unité de stockage et l'interrupteur connecté au potentiel haut de la (i-1)ième unité de stockage et au potentiel haut de la nième unité de stockage sont par défaut passant pour permettre la mise en parallèle des unités de stockage, par exemple constitués de transistors par défaut fermés ou de relais ou micro-switches fermés lorsque leur tension de commande est faible ou nulle.

5. Dispositif selon l'une des revendications 1 à 4 dans lequel la tension minimale de commande de l'interrupteur connecté au potentiel bas de la ième unité de stockage, i allant de 2 à n, et au potentiel bas de la première unité de stockage et la tension minimale de commande de l'interrupteur connecté au potentiel haut de la (i-1)ième unité de stockage et au potentiel haut de la nième unité de stockage sont inférieures à la première tension de seuil, avantageusement au moins 2 fois inférieure.

6. Dispositif selon l'une quelconque des revendications précédentes **caractérisé en ce que** la recharge des unités de stockage s'effectue par une entrée $V_{\text{in}}$ connectée au potentiel haut de la première unité de stockage, soit directement, soit par l'intermédiaire d'un composant unidirectionnel en courant

7. Dispositif selon l'une quelconque des revendications précédentes **caractérisé en ce que** la décharge des unités de stockage s'effectue essentiellement par une sortie $V_{\text{out}}$ connectée au potentiel haut de la nième unité de stockage par l'intermédiaire d'un composant unidirectionnel en courant, par exemple une diode ou un régulateur de tension adapté.

8. Dispositif selon l'une des revendications précédentes, dans lequel au moins un bloc comporte un composant unidirectionnel en courant (K4) pour éviter le retour de courant de $V_{out}$ vers les unités de stockage lorsque celles-ci sont en mode parallèle.

9. Dispositif selon l'une des revendications précédentes, **caractérisé en ce qu'**il comporte plusieurs blocs commutables ayant avantageusement la même tension $V_{in}$ d'entrée et $_{la}$ même tension $V_{out}$ de sortie.

10. Dispositif selon l'une quelconque des revendications précédentes, dans lequel au moins un bloc comporte un composant unidirectionnel en courant, ce bloc étant en mode parallèle de charge, au moins un autre bloc monté en parallèle maintenant une tension de sortie $V_{OUT}$ en mode décharge.

11. Dispositif selon l'une quelconque des revendications précédentes, dans lequel le retour en position parallèle de certains blocs est conditionné par un algorithme de recherche du maximum d'extraction d'énergie de la source d'énergie disposé sur l'entrée $V_{in}$ (MPPT : Maximum Power Point Tracking).

12. Dispositif selon l'une quelconque des revendications précédentes, comprenant des moyens pour maintenir en mode série au moins un des blocs.

13. Dispositif selon l'une quelconque des revendications précédentes dans lequel les unités de stockage sont des microbatteries.

14. Dispositif selon l'une quelconque des revendications précédentes dans lequel les unités de stockage sont des microbatteries dont les électrodes d'insertion peuvent être choisies parmi Si, Ge, Sn, Bi, Sb et des alliages composés des éléments cités, LiCoO2, LiTiOS, V2O5, et dont l'électrolyte peut être choisi parmi les matériaux suivants : LiPON, LiPOx, LLTO, LATP, LiSP, LiSON, LiBON, LiLaZrO.

15. Dispositif selon la revendication 13 ou 14 dont les microbatteries comportent au moins deux électrodes de même composition et même épaisseur, par exemple une microbatterie de type substrat/Ti/SiLix/LiPON/SiLix.

**Patentansprüche**

1. Energiespeichervorrichtung, umfassend mindestens einen Block, wobei der Block mit einer Eingangsspannung $V_{in}$ verbunden ist und eine Spannung $V_{out}$ abgibt, die größer als $V_{in}$ ist, und die Folgendes aufweist:

   - n Energiespeichereinheiten, wobei $n \geq 2$;
   - eine Lade- und Entladeverwaltungsschaltung, die elektrisch mit den n Speichereinheiten verknüpft ist und es ermöglicht, abwechselnd alle Energiespeichereinheiten von einem gleichen Block im Parallel- oder Reihenmodus miteinander zu verbinden;
   - wobei die Energiespeichereinheiten jeweils eine Ladeendspannung $V_{Ladeende}$ und eine Entladeendspannung $V_{Entladeende}$ aufweisen;
   - wobei der Block eine definierte Blockspannung $V_{Block}$ zwischen dem niedrigen Potential der ersten Energiespeichereinheit und dem hohen Potential der n-ten Energiespeichereinheit aufweist;
   wobei die Lade- und Entladeverwaltungsschaltung Folgendes aufweist:

      - erste Mittel zum Auslösen des Wechsels vom Parallelmodus zum Reihenmodus durch das Überschreiten einer ersten Schwellenspannung ($V_{Schwelle1}$) in einer der Energiespeichereinheiten, wobei die erste Schwellenspannung einer Zielladeendspannung der Speichereinheit entspricht;
      - zweite Mittel zum Auslösen des Wechsels vom Reihenmodus zum Parallelmodus durch das Unterschreiten der Spannung $V_{Block}$ unter eine zweite Schwellenspannung ($V_{Schwelle2}$), wobei die zweite Schwellenspannung einer Spannung entspricht, die gleich der Summe der n Entladeendspannungen der n Energiespeichereinheiten ist;
      - wobei die ersten Mittel und die zweiten Mittel einen Komparatorblock umfassen, der mindestens einen Komparator aufweist, der elektrisch mit den Anschlüssen einer der Speichereinheiten oder mit den Anschlüssen des Blocks verknüpft ist;

         o wobei das Erkennen des Übergangs durch die erste Schwellenspannung mittels einer Bezugsspannung und des Komparatorblocks erfolgt und

o wobei das Erkennen des Übergangs durch die zweite Schwellenspannung mittels einer Bezugsspannung und des Komparatorblocks erfolgt;

- wobei das niedrige Potential der i-ten Speichereinheit, wobei i von 2 bis n geht, mittels eines Schalters mit dem hohen Potential der (i-1)-ten Speichereinheit verbunden ist;
- wobei das niedrige Potential der i-ten Speichereinheit mittels eines Schalters mit dem niedrigen Potential der ersten Speichereinheit verbunden ist; und
- wobei das hohe Potential der (i-1)-ten Speichereinheit über einen Schalter mit dem hohen Potential der n-ten Speichereinheit verbunden ist;

und dadurch, dass die Vorrichtung mindestens drei Blöcke aufweist, um über mindestens einen Block im Lademodus, mindestens einen Block im Entlademodus und mindestens einen Block im Übergangsmodus, in dem sich die ersten Mittel und die zweiten Mittel im Wechsel befinden, zu verfügen.

2. Vorrichtung nach Anspruch 1, wobei der Komparatorblock zwei Komparatoren aufweist.

3. Vorrichtung nach einem der Ansprüche 1 oder 2, ferner aufweisend einen steuerbaren Schalter, der elektrisch mit den Anschlüssen einer der Speichereinheiten oder den Anschlüssen des Blocks verknüpft ist, in welchem die Erkennung des Übergangs durch die erste Schwellenspannung oder durch die zweite Schwellenspannung mittels einer Wechselschwellenspannung des elektronisch steuerbaren Schalters erfolgt.

4. Vorrichtung nach einem der Ansprüche 1 bis 3, wobei der Schalter, der mit dem niedrigen Potential der i-ten Speichereinheit, wobei i von 2 bis n geht, und mit dem niedrigen Potential der ersten Speichereinheit verbunden ist, und der Schalter, der mit dem hohen Potential der (i-1)-ten Speichereinheit und mit dem hohen Potential der n-ten Speichereinheit verbunden ist, standardmäßig eingeschaltet sind, um das Parallel setzen der Speichereinheiten zu ermöglichen, zum Beispiel bestehend aus Transistoren, die standardmäßig geschlossen sind, oder aus Relais oder Mikroschaltern, die geschlossen sind, wenn ihre Steuerspannung schwach oder gleich Null ist.

5. Vorrichtung nach einem der Ansprüche 1 bis 4, wobei die Mindeststeuerspannung des Schalters, der mit dem niedrigen Potential der i-ten Speichereinheit, wobei i von 2 bis n geht, und mit dem niedrigen Potential der ersten Speichereinheit verbunden ist, und die Mindeststeuerspannung des Schalters, der mit dem hohen Potential der (i-1)-ten Speichereinheit und mit dem hohen Potential der n-ten Speichereinheit verbunden ist, kleiner als die erste Schwellenspannung sind, vorteilhafterweise mindestens um das Zweifache kleiner sind.

6. Vorrichtung nach einem der vorhergehenden Ansprüche, **dadurch gekennzeichnet, dass** das Wiederaufladen der Speichereinheiten durch einen Eingang $V_{in}$ erfolgt, der mit dem hohen Potential der ersten Speichereinheit entweder direkt oder mittels einer unidirektionalen Stromkomponente verbunden ist.

7. Vorrichtung nach einem der vorhergehenden Ansprüche, **dadurch gekennzeichnet, dass** das Entladen der Speichereinheiten im Wesentlichen durch einen Ausgang $V_{out}$ erfolgt, der mittels einer unidirektionalen Stromkomponente, zum Beispiel einer Diode oder eines angepassten Spannungsreglers, mit dem hohen Potential der n-ten Speichereinheit verbunden ist.

8. Vorrichtung nach einem der vorhergehenden Ansprüche, wobei mindestens ein Block eine unidirektionale Stromkomponente (K4) aufweist, um das Zurückfließen von Strom von $V_{out}$ zu den Speichereinheiten zu verhindern, wenn sich diese im Parallelmodus befinden.

9. Vorrichtung nach einem der vorhergehenden Ansprüche, **dadurch gekennzeichnet, dass** sie mehrere umschaltbare Blöcke aufweist, die vorteilhafterweise die gleiche Eingangsspannung $V_{in}$ und die gleiche Ausgangsspannung $V_{out}$ aufweisen.

10. Vorrichtung nach einem der vorhergehenden Ansprüche, wobei mindestens ein Block eine unidirektionale Stromkomponente aufweist, wobei sich dieser Block im parallelen Lademodus befindet, wobei mindestens ein weiterer Block, der parallel montiert ist, eine Ausgangsspannung $V_{OUT}$ im Entlademodus beibehält.

11. Vorrichtung nach einem der vorhergehenden Ansprüche, wobei die Rückkehr von bestimmten Blöcken in die parallele Position von einem Algorithmus zum Suchen nach der maximalen Energieextraktion aus der Energiequelle, die an dem Eingang $V_{in}$ angeordnet ist, abhängt (MPPT: Maximum Power Point Tracking).

**12.** Vorrichtung nach einem der vorhergehenden Ansprüche, umfassend Mittel zum Halten mindestens eines der Blöcke im Reihenmodus.

**13.** Vorrichtung nach einem der vorhergehenden Ansprüche, wobei die Speichereinheiten Mikrobatterien sind.

**14.** Vorrichtung nach einem der vorhergehenden Ansprüche, wobei die Speichereinheiten Mikrobatterien sind, deren Einführelektroden aus Si, Ge, Sn, Bi, Sb und aus den genannten Elementen zusammengesetzten Legierungen, LiCoO2, LiTiOS, V2O5, ausgewählt sein können, und deren Elektrolyt aus den folgenden Materialien ausgewählt sein kann: LiPON, LiPOx, LLTO, LATP, LiSP, LiSON, LiBON, LiLaZrO.

**15.** Vorrichtung nach Anspruch 13 oder 14, deren Mikrobatterien mindestens zwei Elektroden von gleicher Zusammensetzung und von gleicher Dicke aufweisen, zum Beispiel eine Mikrobatterie vom Typ Substrat/Ti/SiLix/LiPON/SiLix.

**Claims**

**1.** An energy storage device comprising at least one block, said block being connected to an input voltage $V_{in}$ and delivering a voltage $V_{out}$ greater than $V_{in}$ and having:

- n energy storage units, where $n \geq 2$;
- a charge and discharge management circuit electrically linked to the n storage units and making it possible to alternately connect all of the energy storage units of one and the same block to one another, in parallel mode or in series mode;
- the energy storage units respectively having an end of charge voltage $V_{end\ of\ charge}$ and an end of discharge voltage $V_{end\ of\ discharge}$;
- said block having a defined block voltage $V_{Block}$ between the low potential of the first energy storage unit and the high potential of the nth energy storage unit,

wherein said charge and discharge management circuit has:

- first means for triggering the toggling from the parallel mode to the series mode, through the exceedance of a first threshold voltage ($V_{threshold1}$) in one of the energy storage units, said first threshold voltage corresponding to a target end of charge voltage of said storage unit;
- second means for triggering the toggling from the series mode to the parallel mode, by the voltage $V_{Block}$ falling below a second threshold voltage ($V_{threshold2}$), said second threshold voltage corresponding to a voltage equal to the sum of the n end of discharge voltages of the n energy storage units;
- said first means and said second means comprising a comparator block having at least one comparator electrically linked to the terminals of one of the storage units or to the terminals of the block:

    o the detection of the crossing by the first threshold voltage being performed by way of a reference voltage and of said comparator block and
    o the detection of the crossing by the second threshold voltage being performed by way of a reference voltage and of said comparator block;

- the low potential of the ith storage unit, i ranging from 2 to n, being connected to the high potential of the (i-1)th storage unit by means of a switch;
- the low potential of the ith storage unit being connected to the low potential of the first storage unit by means of a switch; and
- the high potential of the (i-1)th storage unit being connected to the high potential of the nth storage unit via a switch;

and in that said device has at least three blocks, to have at least one block in charge mode, at least one block in discharge mode and at least one block in transition mode in which the first means and the second means are in the process of switching.

**2.** The device according to claim 1, wherein said comparator block has two comparators.

**3.** The device according to one of claims 1 or 2, further having a commandable switch electrically linked to the terminals of one of the storage units or to the terminals of the block in which the detection of the crossing by the first threshold voltage or by the second threshold voltage is performed by way of a toggle threshold voltage of said electronically commandable switch.

4. The device according to one of claims 1 to 3 wherein the switch connected to the low potential of the ith storage unit, i ranging from 2 to n, and to the low potential of the first storage unit and the switch connected to the high potential of the (i-1)th storage unit and to the high potential of the nth storage unit are by default on to allow paralleling of the storage units, for example made up of transistors which are closed by default or of relays or micro-switches which are closed when their control voltage is low or zero.

5. The device according to one of claims 1 to 4 wherein the minimum control voltage of the switch connected to the low potential of the ith storage unit, i ranging from 2 to n, and to the low potential of the first storage unit and the minimum control voltage of the switch connected to the high potential of the (i-1)th storage unit and to the high potential of the nth storage unit are lower than the first threshold voltage, advantageously at least 2 times lower.

6. The device according to any one of the preceding claims, **characterised in that** the storage units are recharged through an input $V_{in}$ connected to the high potential of the first storage unit, either directly or by way of a one-way current component.

7. The device according to any one of the preceding claims, **characterised in that** the storage units are discharged essentially through an output $V_{out}$ connected to the high potential of the nth storage unit by way of a one-way current component, for example a diode or a matched voltage regulator.

8. The device according to one of the preceding claims, wherein at least one block has a one-way current component (K4) for avoiding the return of current $V_{out}$ to the storage units when these are in parallel mode.

9. The device according to one of the preceding claims, **characterised in that** it has several switchable blocks advantageously having the same input voltage $V_{in}$ and the same output voltage $V_{out}$.

10. The device according to any one of the preceding claims, wherein at least one block has a one-way current component, this block being in parallel charge mode, at least one other block connected in parallel maintaining an output voltage $V_{OUT}$ in discharge mode.

11. The device according to any one of the preceding claims, wherein the return of certain blocks to the parallel position is conditional upon an algorithm for searching for the maximum energy extraction from the energy source positioned at the input $V_{in}$ (MPPT: Maximum Power Point Tracking).

12. The device according to any one of the preceding claims, comprising means for keeping at least one of the blocks in series mode.

13. The device according to any one of the preceding claims, wherein the storage units are microbatteries.

14. The device according to any one of the preceding claims, wherein the storage units are microbatteries whose insertion electrodes may be chosen from among Si, Ge, Sn, Bi, Sb and alloys formed of said elements, LiCoO2, LiTiOS, V2O5, and whose electrolyte may be chosen from among the following materials: LiPON, LiPOx, LLTO, LATP, LiSP, LiSON, LiBON, LiLaZrO.

15. The device according to claim 13 or 14, whose microbatteries have at least two electrodes of the same composition and of the same thickness, for example a microbattery of type substrate/Ti/SiLix/LiPON/SiLix.

FIG.1a

FIG.1b

FIG.2

$V_{bloc}$

$I_{out}$

BC

$V_{out}$

K1

$V_{cell2}$

Cell2

$I_{in}$

K3

$V_{in}$

Cell1 $V_{cell1}$

K2

# FIG.3

Mode          Caractéristique électrique du bloc de comparaison
              (en fonction de $V_{bloc}$)

Mode série
(K1&K2 ouverts et
K3 fermé)

Mode parallèle
(K1&K2 fermés et
K3 ouvert)

$V_{bloc}$

$V_{seuil1}$          $V_{seuil2}$

$= V_{fin\ de\ charge}$    $= n.V_{fin\ de\ décharge}$

# FIG.4

FIG.5

FIG.6

FIG.7

FIG.8

FIG.9

FIG.10

FIG.11

EP 3 568 906 B1

FIG.12

FIG.13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8664920 B2
- US 7268517 B2

- EP 2669988 A

**Littérature non-brevet citée dans la description**

- *Journal of Power Sources,* 2004, vol. 136, 401-407